Europäisches Patentamt

European Patent Office

Office européen des brevets

(19)

(11) Veröffentlichungsnummer: **0 300 190 B1**

(12) **EUROPÄISCHE PATENTSCHRIFT**

(45) Veröffentlichungstag der Patentschrift:
09.05.90

(51) Int. Cl.⁵: **F16K 31/02, F16K 31/06**

(21) Anmeldenummer: **88109454.4**

(22) Anmeldetag: **14.06.88**

(54) Elektromagnetisches Steuerventil.

(30) Priorität: **22.07.87 DE 3724218**

(43) Veröffentlichungstag der Anmeldung:
**25.01.89 Patentblatt 89/4**

(45) Bekanntmachung des Hinweises auf die Patenterteilung:
**09.05.90 Patentblatt 90/19**

(84) Benannte Vertragsstaaten:
**DE ES FR GB IT**

(56) Entgegenhaltungen:
**WO-A-85/01561
DE-A- 2 243 382
DE-A- 2 445 493
DE-A- 2 541 033
DE-A- 2 909 504
DE-A- 3 445 405
DE-B- 1 288 860
DE-C- 2 262 488
DE-C- 3 544 527
US-A- 3 451 429
US-A- 4 251 051**

(73) Patentinhaber: **PIERBURG GMBH,
Alfred-Pierburg-Strasse 1, D-4040 Neuss 1(DE)**

(72) Erfinder: **Dohrmann, Rolf, Eichendorffstrasse 62,
D-4044 Kaarst(DE)**

## Beschreibung

Die Erfindung bezieht sich auf ein elektromagnetisches Steuerventil zur Steuerung des Druckmittelflußes aus einer Druckkammer gemäß dem Oberbegriff des Patentanspruchs1.

Ein derartiges Steuerventil ist Gegenstand der älteren Anmeldung DE-C 3 544 527 und wird zur Steuerung von automatischen Kraftfahrzeuggetrieben mit elektischer Signalverarbeitung benötigt. Hierbei ist es notwendig, daß der Ventilkörper des Steuerventils nicht nur die Endpunkte der Verstellung - Ventil zu und voll auf - einnehmen kann, sondern zusätzlich in Abhängigkeit von der elektrischen Belastung der Erregerspule jede mögliche Zwischenstellung.

Nach der Beschreibung wird diese Eigenschaft dadurch erreichbar, daß die Ventilkennung und elektromagnetische Kraft durch Einstellen des im magnetischen Kreis bestehenden Luftspaltes aufeinander abgestimmt werden.

Derartige Ventile haben jedoch den Nachteil, daß sich der als Kugel ausgebildete Ventilkörper aufgrund von fertigungsbedingten Toleranzstreuungen der Ventilkörperführung einseitig an dieser anlegen kann, sich somit dezentriert auf den Ventilsitz setzt und es dann größerer magnetischer Kräfte bedarf, die Kugel mittig in den Ventilsitz zu ziehen, mit der Konsequenz, daß Regelabweichungen auftreten.

Aus der gattungsbildenden Schrift DE-C 2 262 488 ist ein Ventil bekannt, bei dem der kugelförmige Anker mittelbar über eine zweite Kugel aus nachgiebigem Material den Ventilsitz umschließt.

Diese Ausführung hat einmal den Nachteil, daß sich, begünstigt durch hohe Temperaturen des Arbeitsfluids in einer Größenordnung bis zu ca. 180° C, dauerhafte Abdrücke und Anplattungen in den nachgiebigen Kugelmaterial, hervorgerufen durch Anpressen auf den Ventilsitz auf der einen und dem Druck des Ankers auf der anderen Seite, bilden, wodurch durch Klemm- bzw. Klebeneigung der Abdichtkugel unterschiedliche Arbeitsluftspalte gebildet werden, was zu Druckkennlinienunterschieden und - Sprüngen führt.

Zum anderen ist es bei dieser Ausführung zwingend notwendig, den kugelförmigen Anker eng toleriert zu führen, daß er genau mittig auf die Verschlußkugel aufsetzt, da es sonst ebenfalls zu Druckkennlinienunterschieden kommen kann.

Ersetzt man die elastische Dichtkugel durch eine Metallkugel, entfällt zwar der Nachteil, der durch die bleibende Verformung entsteht, die Gefahr der Druckkennlinienschwankungen durch produktionsbedingte Toleranzen der Ankerführungsbohrung bleibt jedoch erhalten.

Aufgabe der Erfindung ist es, ein gattungsgemäßes Steuerventil derart zu gestalten, daß oben beschriebene Nachteile nicht mehr auftreten.

Diese Aufgabe ist mit den im Kennzeichen des Patentanspruchs 1 genannten Merkmalen gelöst. Weitere Merkmale sind in den Unteransprüchen genannt.

Erfindungsgemäß drückt ein als Kugel ausgebildeter Anker, unterstützt von einer Feder, über einen antimagnetischen, beliebig geformten Zwischenstößel einen ebenfalls antimagnetischen Ventilkörper gegen einen Ventilsitz. Hierbei ist es nicht mehr nötig, den Anker in einer sehr eng tolerierten Führungsbohrung exakt zentrisch zum Ventilsitz zu führen, da der Zwischenstößel die Toleranzen ausgleicht, was zu einer Herstellungskostenminderung beiträgt bei gleichzeitiger Verbesserung der Leistungsfähigkeit.

Ausführungsbeispiele der Erfindung sind in der Zeichnungdargestellt und werden nachfolgend beschrieben.

Es zeigt:

Fig. 1 ein Steuerventil im Schnitt,
Fig. 2 eine weitere Ausgestaltung eines Zwischenstößels.

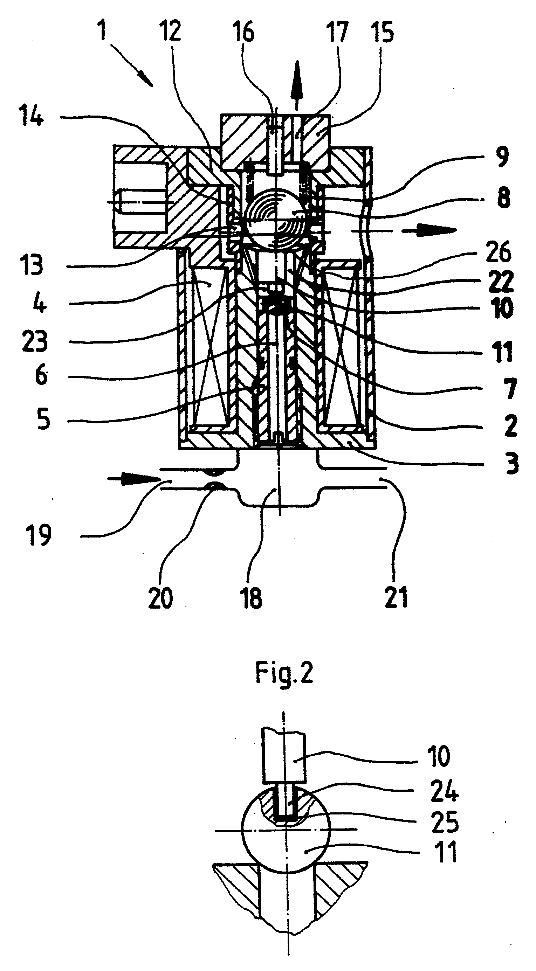

Fig.1 zeigt ein Steuerventil 1, das ein zylindrisches Ventilgehäuse 2 aufweist, in dem sich ein feststehender hohlgebohrter Magneteisenkern 3 befindet, der von einer Erregerspule 4 umgeben ist, die über nicht dargestellte, elektrische Leitungen an einen Steuerstromkreis angeschlossen ist und der angelegten Spannung entsprechende magnetische Kräfte erzeugt.

Der Magneteisenkern 3 ist an seinem unteren Teil als Ventilgehäuseboden ausgeführt und weist in seinem Innneren eine über ein Gewinde oder eine Preßpassung verstellbare, aus antimagnetischem Werkstoff gefertigte Hülse 5 auf, die als Druckmittelleitung 6 dient und an ihrem oberen Ende einen Ventilsitz 7 bildet. Durch die Verstellmöglichkeit der Hülse 5 wird der Restluftspalt veränderbar, wodurch die auf einen Anker 8 wirkende Magnetkraft beeinflußt wird. Daraus ergibt sich der Vorteil, daß eine Veränderung der Steigung der Druckkennlinie erreichbar wird bzw. ein Einstellpunkt auf der Druckkennlinie exakt justiert werden kann.

Der als Kugel ausgebildete Anker 8 drückt aufgrund der magnetischen Kraft und mit Unterstützung einer antimagnetischen Feder 9 auf einen aus antimagnetischem Werkstoff hergestellten Zwischenstößel 10, der wiederum einen ebenfalls antimagnetischen Ventilkörper11 gegen eine hydraulische Kraft auf den Ventilsitz 7 schiebt. Der Anker 8 wird in einer Kugelführung 12 geführt, die sich in einem mit Druckmittelabflußbohrungen 13 versehenen, anti magnetischen Zentrierring 14 bis zum Magneteisenkern 3 fortsetzt. Die Feder 9 stützt sich an einem Verschlußstopfen 15 ab, an dem ein einstellbarer antimagnetischer Anschlag 16 zur Hubbegrenzung des Ankers 8 angeordnet ist und der eine oder mehrere Druckmittelabflußbohrungen 17 aufweisen kann.

Die Feder 9 hält Anker 8, Zwischenstößel 10 und Ventilkörper 11 kraftschlüssig und verhindert dadurch eine Sprungfunktion in der Druckkennlinie. Die Druckmittelleitung 6 wird über eine Druckkammer 18, die einen Druckmittelanschluß 19 mit einer Drossel 20 aufweist, mit Druckmittel versorgt. Die Druckkammer 18 ist über einen Druckanschluß 21 mit einem nicht dargestellten Verbraucher, beispielsweise einem Steller, verbunden. Das Druckmittel gelangt durch die Druckmittelleitung 6, über den Ventilsitz 7, über Förderkanäle 22, die in Verbindung mit der Wandung der Führungsbohrung 23 gebildet werden, an dem Zwischenstößel 10 und dem Anker 8 vorbei zu den Druckmittelabflußbohrungen 13 oder 17, die mit einem nicht dargestellten Druckmittelsumpf verbunden sind, sodaß das Druckmittel druckfrei abfließen kann.

Der als Kugel ausgebildete Ventilkörper kann auch durch eine andere Ausführungsform ersetzt werden.

In einer weiteren Ausgestaltung (Fig. 2) weist der Zwischenstößel 10 an dem dem Anker 8 gegenüberliegenden Ende einen zylindrischen oder mehreckigen Zapfen 24 auf, der in eine zylindrische oder konische Ausnehmung 25 des Ventilkörpers 11 eingreift. Das untere Ende des Zapfens 24 ist ballig ausgeführt und stützt sich punktförmig auf einer waagerechten, ebenen Fläche am Fuße der Ausnehmung 25 ab.

Das Radialspiel von Zapfen 24 zu Ausnehmung 25 am Ventilkörper11 muß so groß sein, daß nach Auftreffen des Ventilkörpers auf einen Punkt des Ventilsitzes 7 eine Kippbewegung des Ventilkörpers 11 stattfinden kann, so daß dieser voll zur Auflage kommt.

Der Vorteil dieser Ausgestaltung liegt insbesondere darin, daß eine präzise und damit teuere Ventilkörperführung entfallen kann, da der Ventilkörper 11 durch den Zapfen 24 geführt wird und die Verbindung Zapfen-Ventilkörper in gewissem Maße wie ein Kardangelenk nach allen Seiten kippbar ist.

In einer weiteren Ausgestaltung weist die Wandung der Führungsbohrung 23 stromab des Ventilkörpers 11 Bypässe 26 auf, die bei Erhöhung der Flußmittelmenge oder konstruktions- oder fertigungsbedingt als Förderkanäle eine Verbindung zwischen der Führungsbohrung 23 und dem Druckmittelabfluß 13 oder 17 bilden.

## Patentansprüche

1. Elektromagnetisches Steuerventil zur Steuerung des Druckmittelflusses aus einer Druckkammer, in der ein Druck über einen Ventilkörper (11) des als Sitzventil ausgebildeten Ventiles abhängig von der elektrischen Belastung einer Erregerspule (4) eingestellt und geregelt wird, wobei die auf einen als Kugel ausgebildeten Anker (8) wirkende elektromagnetische Kraft in Schließrichtung und die auf den Ventilkörper wirkende hydraulische Kraft in Öffnungsrichtung des Ventiles wirken und die Resultierende dieser Kräfte ein Überschuß der elektromagnetischen Kraft ist, dadurch gekennzeichnet, daß der von einer Feder (9) gehaltene Anker (8) auf einen antimagnetischen Zwischenstößel (10) einwirkt, der stromauf des Ventilkörpers (11) angeordnet ist, wobei der Zwischenstößel (10) in einer Führungsbohrung (23) axial beweglich ist und in Verbindung mit der Wandung der Führungsbohrung (23) Förderkanäle (22) bildende Ausnehmungen aufweist.

2. Steuerventil nach Anspruch 1, dadurch gekennzeichnet, daß der Zwischenstößel (10) an seinem dem Anker (8) gegenüberliegenden Ende einen Zapfen (24) aufweist, der in eine Ausnehmung (25) des Ventilkörpers (11) eingreift.

3. Steuerventil nach Anspruch 1 oder Anspruch 2, dadurch gekennzeichnet, daß die Wandung der Führungsbohrung (23) stromab des Ventilkörpers (11) als Förderkanäle ausgebildete Bypässe (26) zu dem Zwischenstößel (10) aufweist.

4. Steuerventil nach einem der vorstehenden Ansprüche, dadurch gekennzeichnet, daß der Ventilsitz (7) von einer in der Führungsbohrung (23) verstellbaren Hülse (5) gebildet wird.

## Claims

1. Electromagnetic control valve to control the flow of pressure medium from a pressure chamber, in which a pressure is set and regulated via a valve body (11) of the valve designed as a seat valve dependent on the electric load of an excitation coil (4), the electromagnetic force which acts on an armature (8) designed as a ball acting in the closing direction and the hydraulic force which acts on the valve body acting in the opening direction of the valve, and the resulting force of these forces being in excess of the electromagnetic force, characterized in that the armature (8) held by a spring (9) acts on an antimagnetic intermediate tappet (10), which is arranged upstream of the valve body (11), the intermediate tappet (10) being movable in the axial direction in a guide bore (23) and having recesses forming conveyor ducts (22) in connection with the wall of the guide bore (23).

2. Control valve according to Claim 1, characterized in that the intermediate tappet (10) has a pin (24) at its end opposite to the armature (8), which pin (24) engages in a recess (25) of the valve body (11).

3. Control valve according to Claim 1 or Claim 2, characterized in that the wall of the guide bore (23) downstream of the valve body (11) has bypasses (26), designed as conveyor ducts, to the intermediate tappet (10).

4. Control valve according to one of the preceding Claims, characterized in that the valve seat (7) is formed by a sleeve (5) which is adjustable in the guide bore (23).

## Revendications

1. Soupape de commande électromagnétique pour la commande de l'écoulement du fluide sous pression à partir d'une chambre de pression, dans laquelle une pression est établie et réglée, à l'aide d'un corps de soupape (11) de la soupape réalisée sous forme de soupape à siège en fonction de l'alimentation electrique d'une bobine d'excitation (4), la force électromagnetique s'exerçant sur un induit (8) sous forme de bille agissant dans le sens de fermeture et la force hydraulique s'exerçant sur le corps de soupape agissant dans le sens d'ouverture, et la résultante de ces forces étant un excédent de la force électromagnétique, caractérisée en ce que l'induit (8), maintenu par un ressort (9), agit sur un poussoir intermédiaire antimagnétilque (10) disposé en amont du corps de soupape (11), le poussoir intermédiaire (10) étant mobile axialement dans un alésage de guidage (23) et présentant des évidements formant en liaison avec la paroi de l'alesage de guidage (23) des canaux de transport (22).

2. Soupape de commande selon la revendication 1, caracterisée en ce que le poussoir intermédiaire (10) présente à son extrémité opposée à l'induit (8) un ergot (24) qui s'engage dans un évidement (25) du corps de soupape (11).

3. Soupape de commande selon la revendication 1 ou la revendication 2, caractérisé en ce que la paroi de l'alésage de guidage (23) présente, en aval du corps de soupape (11), des dérivations sous forme de canaux de transport.

4. Soupape de commande selon l'une des revendications précédentes, caractérisée en ce que le siège de soupape (7) est formé par une douille (5) pouvant se déplacer dans l'alésage de guidage (23).

Fig.2